# EUROPÄISCHE PATENTSCHRIFT

(11) **EP 3 817 889 B1**
(45) Veröffentlichungstag und Bekanntmachung des Hinweises auf die Patenterteilung: **29.12.2021**
(21) Anmeldenummer: 20746126.0
(22) Anmeldetag: 17.07.2020
(51) Int. Cl.: B23Q 3/12, B23B 31/08, B23Q 11/00

(54) **VORSATZSPINDELVORRICHTUNG ZUM EINSATZ AN EINER WERKZEUGMASCHINE**
EXTENSION SPINDLE DEVICE FOR USE ON A MACHINE TOOL
DISPOSITIF DE PROLONGEMENT À BROCHE DESTINÉ À UNE MACHINE-OUTIL

(30) Priorität: 30.07.2019 DE 102019211287
(43) Veröffentlichungstag der Anmeldung: 12.05.2021
(73) Patentinhaber: DMG MORI Ultrasonic Lasertec GmbH, 55758 Stipshausen (DE)
(72) Erfinder: KETELAER, Jens, 65205 Wiesbaden (DE); FRANZMANN, Fabian, 55758 Veitsrodt (DE); SCHWENK, Gaston, 55469 Simmern (DE)
(74) Vertreter: MERH-IP Matias Erny Reichl Hoffmann Patentanwälte PartG mbB
(86) Internationale Anmeldenummer: PCT/EP2020/070305
(87) Internationale Veröffentlichungsnummer: WO 2021/018635

(56) Entgegenhaltungen:
- EP-A1- 3 357 636
- US-A1- 2006 032 887
- US-A1- 2017 072 476

## Beschreibung

Die vorliegende Erfindung betrifft eine Vorsatzspindelvorrichtung zum Einsatz an einer Werkzeugmaschine, ein System umfassend der Vorsatzspindelvorrichtung, ein Verfahren zum Steuern der Vorsatzspindelvorrichtung und ein Computerprogrammprodukt zum Ausführen des Verfahrens zum Steuern der Vorsatzspindelvorrichtung.

### Hintergrund

Im Stand der Technik sind Vorsatzspindelvorrichtungen zum Einsatz an Werkzeugmaschinen bekannt, insbesondere bei Bohrprozessen, bei denen eine Spindel der Vorsatzspindelvorrichtung an der Werkzeugmaschine durch eine mechanische Einheit in eine Schwebe gebracht wird. Die mechanische Einheit umfasst eine mechanische Feder, die beim Auflegen von Gewichtsplatten eine Federkraft auf die Spindel ausübt, wobei durch Einstellen der Federkraft mittels einer Einstellschraube die Spindel in einen Schwebezustand gebracht wird. An einer Einstellschraube einer Messuhr wird ein Anzeiger soweit gedreht bis die Messuhr den Wert null erreicht, sodass durch die Messuhr ein maximaler Weg definiert wird, der einer definierten Kraft entspricht. Beim Erreichen dieses Wertes fährt eine Hauptspindel der Werkzeugmaschine frei, sodass der Bohrprozess der Werkzeugmaschine durchgeführt werden kann.

Bei einer wie oben beschriebenen Vorsatzspindelvorrichtung hat es sich als unpraktisch erwiesen, dass Gewichte manuell an die Vorsatzspindelvorrichtung angelegt werden müssen, da der Bohrprozess durch das Anlegen der Gewichte immer wieder gestört wird. Weiterhin wird der Aufbau der Vorsatzspindelvorrichtung durch die mechanische Einheit unnötig vergrößert, was den Bearbeitungsraum der Arbeitsspindel der Werkzeugmaschine einschränkt. Durch das manuelle Anlegen der Gewichte kann an der Vorsatzspindelvorrichtung eine Steuerung der Vorsatzspindelvorrichtung nicht realisiert werden.

Die US2006/032887 A1 offenbart eine Vorsatzspindelvorrichtung zum Einsatz an einer Werkzeugmaschine, umfassend:
- eine Einspannschnittstelle zum Einspannen der Vorsatzspindelvorrichtung an einer Arbeitsspindel der Werkzeugmaschine;
- eine Vorsatzspindeleinheit mit einer Spindel zum Antreiben eines an der Spindel eingespannten Werkzeugs; und
- einen Antrieb zum Ausüben einer Kraft auf die Vorsatzspindeleinheit.

Ausgehend von der Vorsatzspindelvorrichtung im Stand der Technik ist es eine Aufgabe der Erfindung, den Aufbau einer Vorsatzspindelvorrichtung zum Einsatz an einer Werkzeugmaschine zu optimieren.

### Zusammenfassung der Erfindung

Zur Lösung der vorstehend genannten Aufgaben wird erfindungsgemäß eine Vorsatzspindelvorrichtung gemäß Anspruch 1 vorgeschlagen. Abhängige Ansprüche betreffen bevorzugte und beispielhafte Ausführungsformen der Erfindung.

Gemäß der vorliegenden Erfindung wird eine Vorsatzspindelvorrichtung zum Einsatz an einer Werkzeugmaschine vorgeschlagen, umfassend eine Einspannschnittstelle zum Einspannen der Vorsatzspindelvorrichtung an einer Arbeitsspindel der Werkzeugmaschine, eine Vorsatzspindeleinheit mit einer Spindel zum Antreiben eines an der Spindel eingespannten Bohrwerkzeugs, einen Antrieb zum Ausüben einer Kraft auf die Vorsatzspindeieinheit, und einen elektromagnetischen Aktuator zum Ausüben einer der Kraft des Antriebs entgegengesetzten Ausgleichskraft auf die Vorsatzspindeleinheit.

Dies hat den Vorteil, dass durch den elektromagnetischen Aktuator der Aufbau der Vorsatzspindelvorrichtung kompakt gehalten wird und trotzdem die Funktionalität des Entgegenwirkens einer Kraft gegen eine Kraft des Antriebs bestehen bleibt. Daher ergibt sich bei einem Bohrprozess mit einem solchen Aufbau, dass der Bohrprozess mit einer konstanten Kraft durchgeführt werden kann und mittels der Vorsatzspindelvorrichtung besonders gut kleine Bohrungen gefertigt werden können.

In zweckmäßigen Ausführungsbeispielen ist der elektromagnetische Aktuator dazu eingerichtet, eine der Gewichtskraft der Vorsatzspindeleinheit entsprechenden Ausgleichskraft auszuüben, wenn die Vorsatzspindelvorrichtung mit vertikaler Spindelachse und nach unten weisendem Bohrwerkzeug an der Arbeitsspindel der Werkzeugmaschine eingespannt ist.

In zweckmäßigen Ausführungsbeispielen ist der elektromagnetische Aktuator dazu eingerichtet, eine der Gewichtskraft der Vorsatzspindeleinheit entsprechenden Ausgleichskraft auszuüben, derart, dass die Vorsatzspindeleinheit in eine Schwebestellung gebracht wird, wenn die Vorsatzspindelvorrichtung mit vertikaler Spindelachse und nach unten weisendem Bohrwerkzeug an der Arbeitsspindel der Werkzeugmaschine eingespannt ist.

Dies hat den Vorteil, dass der Bohrprozess besonders konstant ausgeführt werden kann und die Vorsatzspindeleinheit präzise bohren kann, sodass kleine Bohrungen besonders genau gebohrt werden können.

In zweckmäßigen Ausführungsbeispielen umfasst die Vorsatzspindelvorrichtung ein Gehäuse, in dem die Vorsatzspindeleinheit parallel zur Spindelachse der Spindel beweglich gelagert ist.

Durch das Gehäuse ist der Aufbau der Vorsatzspindelvorrichtung besonders stabil gehalten, sodass der Bohrprozess mittels der Vorsatzspindelvorrichtung exakt durchgeführt werden kann.

In zweckmäßigen Ausführungsbeispielen ist die Vorsatzspindeleinheit an parallel zur Spindelachse der Spindel verlaufenden Führungen beweglich gelagert.

In zweckmäßigen Ausführungsbeispielen weist die Spindel eine auf einer Seite des Gehäuses offen zugängige Werkzeugaufnahme zur Aufnahme des Bohrwerkzeugs auf.

In zweckmäßigen Ausführungsbeispielen ist die Einspannschnittstelle an der der Werkzeugaufnahme der Spindel gegenüberliegenden Seite des Gehäuses angeordnet ist.

In zweckmäßigen Ausführungsbeispielen dient der Antrieb dazu, die Kraft auf die Vorsatzspindeleinheit in einer Richtung parallel zur Spindelachse der Spindel auszuüben, insbesondere weg von der Einspannschnittstelle und/oder hin zu der Werkzeugaufnahme der Spindel.

In zweckmäßigen Ausführungsbeispielen dient der elektromagnetische Aktuator dazu, die Ausgleichskraft auf die Vorsatzspindeleinheit in einer Richtung parallel zur Spindelachse der Spindel auszuüben, insbesondere hin zu der Einspannschnittstelle und/oder weg von der Werkzeugaufnahme der Spindel.

In zweckmäßigen Ausführungsbeispielen ist die Einspannschnittstelle derart angeordnet, dass die Spindelachse der Spindel mit der Spindelachse der Arbeitsspindel der Werkzeugmaschine parallel, insbesondere koaxial, ausgerichtet ist, wenn die Einspannschnittstelle an der Arbeitsspindel der Werkzeugmaschine eingespannt ist.

In zweckmäßigen Ausführungsbeispielen umfasst der Antrieb einen Linearmotor.

In zweckmäßigen Ausführungsbeispielen ist der Linearmotor dazu eingerichtet, die Vorsatzspindeleinheit zur Ausübung der Kraft zu verfahren.

In zweckmäßigen Ausführungsbeispielen weist der Antrieb eine Positionsmesseinrichtung auf, die dazu eingerichtet ist, eine Position des Antriebs und/oder eine Wegänderung des Antriebs zu ermitteln.

In zweckmäßigen Ausführungsbeispielen umfasst die Vorsatzspindelvorrichtung eine Übertragungseinheit zum Übertragen von Signalen an eine Steuereinrichtung der Werkzeugmaschine, die dazu eingerichtet ist, eine Vorschubbewegung der Arbeitsspindel der Werkzeugmaschine in Richtung der Spindelachse der Arbeitsspindel zu steuern.

Dies hat den Vorteil, dass der Bohrprozess steuerbar ist und der Bohrprozess mit der Vorsatzspindelvorrichtung automatisiert durchgeführt werden kann. Dadurch wird der Bohrprozess optimiert, sodass eine Bearbeitung von einer Vielzahl von Bohrungen in einer schnelleren Zeit durchgeführt werden können, wobei die Bohrungen exakt verarbeitet werden.

In zweckmäßigen Ausführungsbeispielen ist die Übertragungseinheit dazu eingerichtet, ein Regelungssignal an die Steuereinrichtung der Werkzeugmaschine zu übertragen, wobei das Regelungssignal eine auf die Vorsatzspindeleinheit wirkende Gesamtkraft und/oder eine Position bzw. Wegänderung der Vorsatzspindeleinheit und/oder des Antriebs angibt.

In zweckmäßigen Ausführungsbeispielen ist die Übertragungseinheit dazu eingerichtet, ein Einstellsignal, insbesondere ein Sollwert angebendes Einstellsignal, von der Steuereinrichtung der Werkzeugmaschine zu empfangen, wobei der Antrieb dazu eingerichtet ist, die auf Grundlage des Einstellsignals eingestellte Kraft auf die Vorsatzspindeleinheit auszuüben.

Dies hat den Vorteil, dass ein Kraftbetrag im Bohrprogramm definiert und auch während der Bearbeitung der Kraftbetrag angepasst werden kann. Somit wird eine Steuerung für exakte Bohrprozesse realisiert, bei denen eine Vielzahl von Bohrungen optimiert durchgeführt werden können.

In zweckmäßigen Ausführungsbeispielen weist die Spindel einen Ultraschallerzeuger auf, der dazu eingerichtet ist, eine Ultraschallschwingung der Spindel zu erzeugen, insbesondere parallel zur Spindelachse der Spindel.

In zweckmäßigen Ausführungsbeispielen umfasst die Spindel eine innere Kühlmittelzufuhrleitung, insbesondere als Bohrung ausgebildet, zum Leiten von Kühlmittel.

Dies hat den Vorteil, dass bei der Bearbeitung die Vorsatzspindelvorrichtung gekühlt und der Bohrprozess reibungslos durchgeführt werden kann. Störungen durch Erhitzung werden somit reduziert oder sogar komplett vermieden.

In zweckmäßigen Ausführungsbeispielen weist die Einspannschnittstelle eine Hohlschaftkegel-Werkzeugschnittstelle auf.

In zweckmäßigen Ausführungsbeispielen umfasst die Vorsatzspindelvorrichtung ein Gehäuse mit einer ersten Gehäusehälfte und einer zweiten Gehäusehälfte, wobei die Vorsatzspindeleinheit und der elektromagnetische Aktuator in der ersten Gehäusehälfte angeordnet sind.

In zweckmäßigen Ausführungsbeispielen umfasst die Vorsatzspindelvorrichtung einen ersten Endabschnitt und einen zweiten Endabschnitt, wobei zwischen der ersten Gehäusehälfte und der zweiten Gehäusehälfte eine Zwischenplatte angeordnet ist, und wobei in der ersten Gehäusehälfte Führungsstäbe von der Zwischenplatte zum zweiten Endabschnitt zum Führen der Vorsatzspindeleinheit in der ersten Gehäusehälfte angeordnet sind.

In zweckmäßigen Ausführungsbeispielen weist die Vorsatzspindeleinheit eine erste Platte und eine zweite Platte auf, und die Vorsatzspindeleinheit weist weiterhin mindestens einen zwischen der ersten Platte und der zweiten Platte angeordneten Hohlzylinder zum Verbinden der beiden Platten auf, wobei die Spindel an der ersten Platte befestigt ist und der mindestens eine Hohlzylinder radialsymmetrisch um die Spindel angeordnet ist.

In zweckmäßigen Ausführungsbeispielen ist der Antrieb in der zweiten Gehäusehälfte angeordnet und umfasst einen Läufer zum Verfahren der Spindel parallel zu der Spindelachse der Spindel, wobei der Läufer des Antriebs an der zweiten Platte der Vorsatzspindeleinheit befestigt ist.

In zweckmäßigen Ausführungsbeispielen umfasst der elektromagnetische Aktuator einen Stator und einen Läufer, wobei der Stator des elektromagnetischen Aktuators an der Vorsatzspindeleinheit angeordnet ist und der Läufer des elektromagnetischen Aktuators an dem Gehäuse und der Zwischenplatte angeordnet ist.

Dies hat den Vorteil, dass der Aufbau der Vorsatzspindelvorrichtung besonders kompakt gehalten wird, wobei der Bohrprozess konstant verläuft und Bohrungen mit hoher Genauigkeit gebohrt werden.

Gemäß der vorliegenden Erfindung wird ein System vorgeschlagen, umfassend eine numerisch gesteuerte Werkzeugmaschine mit einer Arbeitsspindel, und eine an der Arbeitsspindel aufgenommene Vorsatzspindelvorrichtung gemäß einer der vorstehenden zweckmäßigen Ausführungsbeispiele.

In zweckmäßigen Ausführungsbeispielen umfasst die Werkzeugmaschine eine Steuereinrichtung, die dazu eingerichtet ist, eine Vorschubbewegung der Arbeitsspindel der Werkzeugmaschine in Richtung der Spindelachse der Arbeitsspindel zu steuern, und die Vorsatzspindelvorrichtung eine Übertragungseinheit zum Übertragen von Signalen an die Steuereinrichtung der Werkzeugmaschine aufweist.

In zweckmäßigen Ausführungsbeispielen ist die Übertragungseinheit dazu eingerichtet, ein Regelungssignal an die Steuereinrichtung der Werkzeugmaschine zu übertragen, wobei das Regelungssignal eine auf die Vorsatzspindeleinheit wirkende Gesamtkraft und/oder eine Position bzw. Wegänderung der Vorsatzspindeleinheit und/oder des Antriebs angibt.

In zweckmäßigen Ausführungsbeispielen ist die Steuereinrichtung der Werkzeugmaschine dazu eingerichtet, eine Vorschubgeschwindigkeit der Arbeitsspindel auf Grundlage des von der Übertragungseinheit der Vorsatzspindelvorrichtung empfangenen Regelungssignals zu steuern bzw. zu regeln.

In zweckmäßigen Ausführungsbeispielen ist die Steuereinrichtung der Werkzeugmaschine dazu eingerichtet, ein eine gewünschte Kraft angebendes Einstellsignal, insbesondere ein Sollwert angebendes Einstellsignal, an die Übertragungseinheit der Vorsatzspindelvorrichtung zu übertragen, wobei die Übertragungseinheit dazu eingerichtet ist, das Einstellsignal von der Steuereinrichtung der Werkzeugmaschine zu empfangen, wobei der Antrieb dazu eingerichtet ist, die auf Grundlage des Einstellsignals eingestellte Kraft auf die Vorsatzspindeleinheit auszuüben.

Gemäß der vorliegenden Erfindung wird ein Verfahren zum Steuern eines mit einer Vorsatzspindelvorrichtung gemäß einer der vorstehenden Ausführungsbeispiele durchgeführten Bohrprozesses an einer Werkzeugmaschine mit einer Arbeitsspindel vorgeschlagen, umfassend Aktivieren des elektromagnetischen Aktuator der Vorsatzspindelvorrichtung zum Ausüben der Ausgleichskraft auf die Vorsatzspindeleinheit der Vorsatzspindelvorrichtung, wenn die Vorsatzspindelvorrichtung mit vertikaler Spindelachse und nach unten weisendem Bohrwerkzeug an der Arbeitsspindel der Werkzeugmaschine eingespannt ist, Antreiben des an der Spindel der Vorsatzspindelvorrichtung eingespannten Bohrwerkzeugs, Verfahren der Arbeitsspindel zu einem Werkstück, und Durchführen des Bohrprozesses an dem Werkstück mit dem von der Spindel der Vorsatzspindelvorrichtung angetriebenen Bohrwerkzeug, umfassend das Steuern einer Vorschubbewegung der Arbeitsspindel in Bohrrichtung bei aktiviertem elektromagnetischen Aktuator der Vorsatzspindelvorrichtung und bei Ausüben der der Ausgleichskraft des elektromagnetischen Aktuators entgegengesetzten Kraft durch den Antrieb der Vorsatzspindelvorrichtung.

Gemäß der vorliegenden Erfindung wird ein Computerprogrammprodukt vorgeschlagen, umfassend Befehle, die bei der Ausführung des Programms durch einen mit einer numerisch gesteuerten Werkzeugmaschine verbundenen Computer bzw. eine Steuereinrichtung einer numerisch gesteuerten Werkzeugmaschine diesen bzw. diese veranlassen, das Verfahren zum Steuern eines mit einer Vorsatzspindelvorrichtung gemäß einer der vorstehenden Ausführungsbeispiele durchgeführten Bohrprozesses an einer Werkzeugmaschine mit einer Arbeitsspindel auszuführen.

### Kurzbeschreibung der Figuren

**Fig. 1a** zeigt eine beispielhafte Perspektivdarstellung eines ersten Ausführungsbeispiels einer Vorsatzspindelvorrichtung zum Einsatz an einer Werkzeugmaschine gemäß der Erfindung;
**Fig.1b** zeigt eine weitere beispielhafte Perspektivdarstellung des ersten Ausführungsbeispiels einer Vorsatzspindelvorrichtung zum Einsatz an einer Werkzeugmaschine gemäß der Erfindung.
**Fig. 2a** zeigt eine beispielhafte Perspektivdarstellung eines zweiten Ausführungsbeispiels einer Vorsatzspindelvorrichtung zum Einsatz an einer Werkzeugmaschine gemäß der Erfindung.
**Fig. 2b** zeigt eine weitere beispielhafte Perspektivdarstellung des zweiten Ausführungsbeispiels einer Vorsatzspindelvorrichtung zum Einsatz an einer Werkzeugmaschine gemäß der Erfindung.
**Fig. 2c** zeigt eine weitere beispielhafte Perspektivdarstellung des zweiten Ausführungsbeispiels einer Vorsatzspindelvorrichtung zum Einsatz an einer Werkzeugmaschine gemäß der Erfindung.
**Fig. 3** zeigt eine weitere beispielhafte Perspektivdarstellung einer Vorsatzspindelvorrichtung zur Darstellung der durch die Vorsatzspindelvorrichtung ausgeübten Kräfte gemäß der Erfindung.
**Fig. 4** zeigt eine beispielhafte Perspektivdarstellung eines Systems umfassend eine Werkzeugmaschine und der Vorsatzspindelvorrichtung gemäß Fig. 1a und 1b oder 2a bis 2c;
**Fig. 5** zeigt ein Flussdiagramm zur Darstellung eines Verfahrens zum Steuern eines mit einer Vorsatzspindelvorrichtung durchgeführten Bohrprozesses an einer Werkzeugmaschine mit einer Arbeitsspindel;

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der Ansprüche umfasst sind.

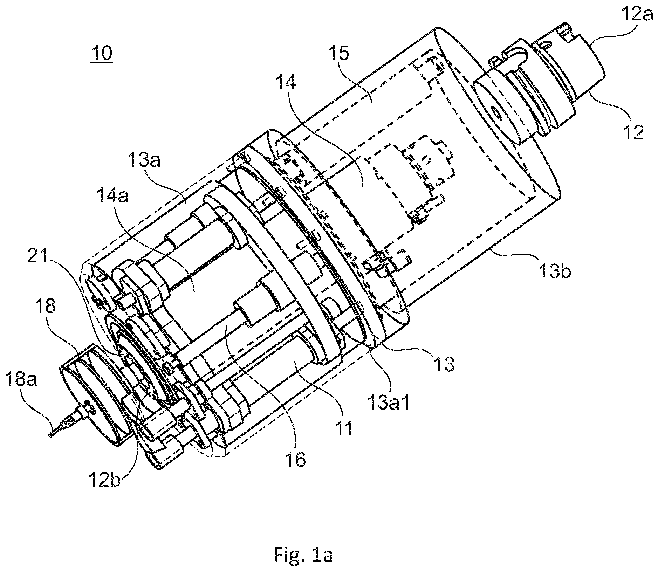

**Fig. 1a** zeigt in einer perspektiven Darstellung einen beispielhaften Aufbau einer Vorsatzspindelvorrichtung 10, die an einer ersten Endseite 12a eine Einspannschnittstelle 12 zum Einspannen an einer Arbeitsspindel einer Werkzeugmaschine umfasst und an einer zweiten Endseite 12b, die gegenüber der ersten Endseite 12a angeordnet ist, eine Werkzeugaufnahme 21 zum Einspannen von Werkzeugen umfasst. Die Einspannschnittstelle 12 zum Einspannen an der Arbeitsspindel der Werkzeugmaschine ist beispielsweise als eine Hohlschaftkegel-Werkzeugschnittstelle ausgebildet.

Die Vorsatzspindelvorrichtung 10 umfasst ein Gehäuse 13, das in eine erste Gehäusehälfte 13a und in eine zweite Gehäusehälfte 13b aufgeteilt ist, wobei zwischen der ersten Gehäusehälfte 13a und der zweiten Gehäusehälfte 13b eine Zwischenplatte 13a1 angeordnet ist. an der ersten Gehäusehälfte 13a ist der zweite Endabschnitt 12b mit der Werkzeugaufnahme angeordnet und an der zweiten Gehäusehälfte ist der erste Endabschnitt 12a angeordnet, an dem die Einspannschnittstelle 12 angeordnet ist.

In dem Gehäuse 13 ist eine Vorsatzspindeleinheit 14 der Vorsatzspindelvorrichtung 10 angeordnet, die beweglich eingerichtet ist. Die Vorsatzspindeleinheit 14 umfasst eine Spindel 14a, die beispielsweise einen Ultraschallerzeuger zum Erzeugen von Ultraschallschwingung aufweist, die parallel zu einer Spindelachse der Spindel 14a erzeugt wird. Daher ist die Spindel 14a als eine Ultraschallspindel ausgebildet.

Die Vorsatzspindelvorrichtung 10 umfasst weiter einen Antrieb 15, der beispielsweise in der zweiten Gehäusehälfte 13b angeordnet ist. Der Antrieb 15 kann beispielweise als ein Linearmotor ausgebildet sein, kann aber auch als jede andere vorstellbare Art von Antrieb ausgebildet sein. Der Antrieb 15 ist derart eingerichtet, dass er eine vordefinierte Kraft auf die Vorsatzspindeleinheit 14 ausübt.

Die Vorsatzspindelvorrichtung 10 umfasst weiterhin einen elektromagnetischen Aktuator 16, der beispielsweise in der ersten Gehäusehälfte 13a angeordnet ist. Der elektromagnetische Aktuator 16 ist derart eingerichtet, dass er eine Ausgleichskraft gegen die vom Antrieb ausgeübte Kraft auf die Vorsatzspindeleinheit 14 ausübt. Der elektromagnetische Aktuator 16 ist beispielsweise als eine magnetische Feder ausgebildet, die durch die ausgeübte Ausgleichskraft die Vorsatzspindeleinheit 14 in die Schwebe bringt. Während der Antrieb 15 die Kraft auf die Vorsatzspindeleinheit 14 ausübt, bringt der elektromagnetische Aktuator 16 die Vorsatzspindeleinheit 14 durch eine ausgeübte Ausgleichskraft in einen Schwebezustand. Der elektromagnetische Aktuator 16 kann beispielweise als ein Permanentmagnet mit einem Stahlkern ausgebildet sein. Der elektromagnetische Aktuator 16 kann beispielsweise als eine Spule ausgebildet sein, die durch einen induzierten Strom eine magnetische Kraft auf die Vorsatzspindeleinheit 14 ausübt. Der elektromagnetische Aktuator ist nicht durch die hier beschriebenen Ausführungsformen eingeschränkt und kann in jeder Form ausgebildet sein, sodass eine magnetische oder elektromagnetische Kraft auf die Vorsatzspindeleinheit 14 ausgeübt wird.

An der zweiten Endseite 12b der Vorsatzspindelvorrichtung 10 ist die Werkzeugaufnahme 21 angeordnet, die zum Einspannen von Werkzeugen ausgebildet ist. Zum Ausführen eines Bohrprozesses kann beispielweise ein Hohlbohrer 18a mit einer Auswerfereinheit 18 an der Werkzeugaufnahme 21 eingespannt sein. Die Auswerfereinheit 18 ist derart eingerichtet, dass die im Bohrprozess entstandenen Bohrkerne, die beim Bohrprozess in dem Hohlbohrer 18a gesammelt werden, durch eine durch die Auswerfereinheit 18 ausgeübte Ausstoßkraft ausgestoßen werden und der Hohlbohrer 18a somit von den entstandenen Bohrkernen befreit wird. Die von der Auswerfereinheit 18 ausgeübte Ausstoßkraft wird beispielsweise durch eine elektromagnetische Kraft ausgeübt.

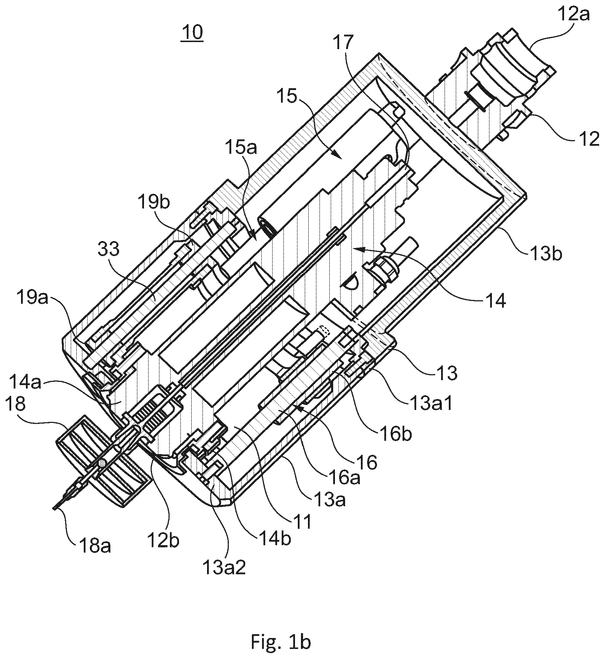

**Fig. 1b** zeigt die in **Fig. 1a** dargestellte Vorsatzspindelvorrichtung 10 in einem Querschnitt, wobei der Querschnitt derart dargestellt ist, dass die Vorsatzspindelvorrichtung 10 in einer Mittelachse geschnitten ist. Die bereits in **Fig.1** beschriebenen Komponenten der Vorsatzspindelvorrichtung 10 sind in **Fig.1b** gleichermaßen angeordnet.

Die Vorsatzspindeleinheit 14 umfasst eine erste ringförmige Platte 19a, eine zweite ringförmige Platte 19b und mindestens einen Hohlzylinder 11, der in der ersten Gehäusehälfte 13a angeordnet sind. Die in der Fig.1b dargestellte Vorsatzspindeleinheit 14 umfasst beispielsweise drei Hohlzylinder 11. Die erste ringförmige Platte 19a ist parallel zu der zweiten ringförmigen Platte 19a in der ersten Gehäusehälfte 13a angeordnet, wobei die erste ringförmige Platte 19a mittels der Hohlzylinder 19c, die senkrecht zu den beiden ringförmigen Platten 19a, 19b angeordnet sind, verbunden sind. Durch die Hohlzylinder 11 hindurch sind Führungsstäbe 22 angeordnet, die von der Zwischenplatte 13a1 bis zu der zweiten Endseite 12b der Vorsatzspindelvorrichtung 10 verlaufen. In den Hohlzylindern 11 sind Kugelführungen angeordnet, sodass die Vorsatzspindeleinheit 14 an den Führungsstäben 33 geführt werden können. Das Führen der Vorsatzspindeleinheit 14 innerhalb der ersten Gehäusehälfte 13a verläuft axial zu einer Spindelachse der Spindel 14a. Die Vorsatzspindeleinheit 14 ist daher in der ersten Gehäusehälfte 13a in axialer Spindelrichtung der Spindel 14a frei beweglich angeordnet. Die Führungsstäbe 33 verlaufen innerhalb der Hohlzylinder 11 und sind parallel zu den Hohlzylindern 11 angeordnet.

Die Spindel 14a ist an der ersten ringförmige Platte 19a der Vorsatzspindeleinheit 14 angeordnet. Die Spindel 14a ist derart eingerichtet, dass sie parallel zu den Hohlzylindern 11 ausgerichtet ist und innerhalb der beiden ringförmigen Platten 19a, 19b angeordnet ist, wobei die beiden ringförmigen Platten 19a, 19b senkrecht zu der Spindel 14a angeordnet sind. Die Hohlzylinder 11 und die durch die Hohlzylinder 11 verlaufenden Führungsstäbe 33 sind radialsymmetrisch um die Spindel 14a angeordnet.

Der elektromagnetischer Aktuator 16 umfasst einen Läufer 16a und einen Stator 16b. Der Stator 16b des elektromagnetischen Aktuators 16 ist an der zweiten ringförmigen Platte 19b der Vorsatzspindeleinheit 14 angeordnet. Der Läufer 16a ist an der Zwischenplatte 13a1 und an der zweiten Endseite 12b der Vorsatzspindelvorrichtung 10 befestigt, wobei der Läufer 16a des elektromagnetischen Aktuators 16 innerhalb des Stators 16b des elektromagnetischen Aktuators 16 verläuft. Während der Läufer 16a des elektromagnetischen Aktuators 16 an der Zwischenplatte 13a1 und an der zweiten Endseite 12b der Vorsatzspindelvorrichtung 10 fest angeordnet ist, ist der Stator 16b des elektromagnetischen Aktuators 16 an der Vorsatzspindeleinheit 14 angeordnet, die in axialer Spindelachse der Spindel 14a frei beweglich ist.

Der Antrieb 15 umfasst einen Läufer 15a, wobei der Läufer 15a in eine Richtung bewegbar ist. Der Antrieb 15 kann beispielweise als ein Linearmotor ausgebildet sein, kann aber auch als jede andere vorstellbare Art von Antrieb ausgebildet sein. Der Antrieb 15 ist in der zweiten Gehäusehälfte 13b angeordnet und der Läufer 15a des Antriebs 15 wird an der zweiten ringförmigen Platte 19b der Vorsatzspindeleinheit 14 befestigt. Bei einem Bohrprozess wird die vordefinierte Kraft auf die Vorsatzspindeleinheit 14 ausgeübt, indem der an der zweiten ringförmigen Platte 19b befestige Läufer 15a des Antriebs 15 die im Antrieb 15 vordefinierten Kraft auf die Vorsatzspindeleinheit 14 ausübt. Während der Antrieb 15 die vordefinierte Kraft auf die Vorsatzspindeleinheit 14 ausübt, übt der elektromagnetische Aktuator 16 eine Ausgleichskraft auf die Vorsatzspindeleinheit 14 aus, sodass die Vorsatzspindeleinheit 14 in einen Schwebezustand gebracht wird.

Der an der Werkzeugaufnahme 21 eingespannte Hohlbohrer 18a umfasst die zum Auswerfen von Bohrkernen eingerichtete Auswerfereinheit 18. Die Auswerfereinheit 18 umfasst beispielsweise eine erste Spule und eine zweite Spule, eine Schaltplatine, eine elektromagnetische Schalteinrichtung, eine Spannungsquelle, einen Magneten und einen Auswerfer. Der Auswerfer ist an dem Magneten angeordnet, welcher beispielsweise ein Neodym-Stab- oder Kugelmagnet ist.

Durch Anlegen eines Stroms an der ersten Spule wird die erste Spule angeregt und der an dem Magneten befestigte Auswerfer wird in eine erste Position gebracht. Durch das Anlegen eines Stroms an der zweiten Spule wird die zweite Spule angesteuert. Durch das Stromlosschalten der ersten Spule und durch das Ansteuern der zweiten Spule wird der Auswerfer in eine zweite Position gebracht. Wenn die erste Position als eine Ausgangsposition definiert ist, so definiert diese Position den Zustand, indem ein Bohrprozess einer Bohrung stattfindet. Nach abgeschlossenen Bohrprozess wird die erste Spule stromlosgeschaltet und die zweite Spule angesteuert, sodass der Auswerfer von der ersten Position in die zweite Position gebracht wird. Der in dem Bohrprozess entstandene Bohrkern wird durch das Verfahren des Auswerfers von der ersten Position in die zweite Position ausgeworfen. Nachdem der Bohrkern ausgestoßen wurde, wird der Auswerfer durch stromlosschalten der zweiten Spule und durch Ansteuern der ersten Spule in die erste Position gebracht.

Die Auswerfereinheit 18 kann durch eine Steuerungseinheit gesteuert werden. Bei der Ansteuerung der Auswerfereinheit 18 können Dauer und Frequenz des Auswerfers gesteuert und/oder kontrolliert werden. Bei Bohrprozessen mit Hohlbohrern verursachen die in Bohrprozessen entstandenen Bohrkerne Störungen im Bearbeitungsprozess, da Hohlbohrer verstopfen oder im Bearbeitungsbereich der Werkzeugmaschine landen können. Die oben beschriebene Auswerfereinheit 18 hat den Vorteil, dass Bohrkerne kontrolliert ausgestoßen werden. Durch die Auswerfereinheit 18 werden Verstopfungen von Hohlbohrern reduziert oder vermieden. Durch die Auswerfereinheit 18 können Bohrkerne genügend weit und kontrolliert ausgestoßen werden, sodass die Bohrkerne nicht in den Bearbeitungsraum der Werkzeugmaschine ausgeworfen werden. Durch das Steuern des Bohrkernauswerfens werden Bohrprozesses optimiert, da Störungen vermieden werden. Durch das Steuern können die Bohrprozesse weiter automatisiert werden und Bohrprozesse können konstant durchgeführt werden. Bei Fertigung von vielen kleinen Bohrungen werden somit die Fertigungen weiter optimiert und die Störanfälligkeit der Werkzeugmaschine reduziert.

Die Spindel 14a der Vorsatzspindeleinheit 14 umfasst eine innere Kühlmittelzufuhrleitung 17, die eingerichtet ist, Kühlmittel zu leiten. Die innere Kühlmittelleitung ist beispielsweise als eine Bohrung ausgebildet. Das Kühlmittel wird beispielsweise von außen an die Vorsatzspindelvorrichtung 10 zugeführt und durch einen Anschluss an die innere Kühlmittelzufuhrleitung weitergeleitet. Die Kühlmittelzufuhr kann beispielsweise von außen gesteuert werden.

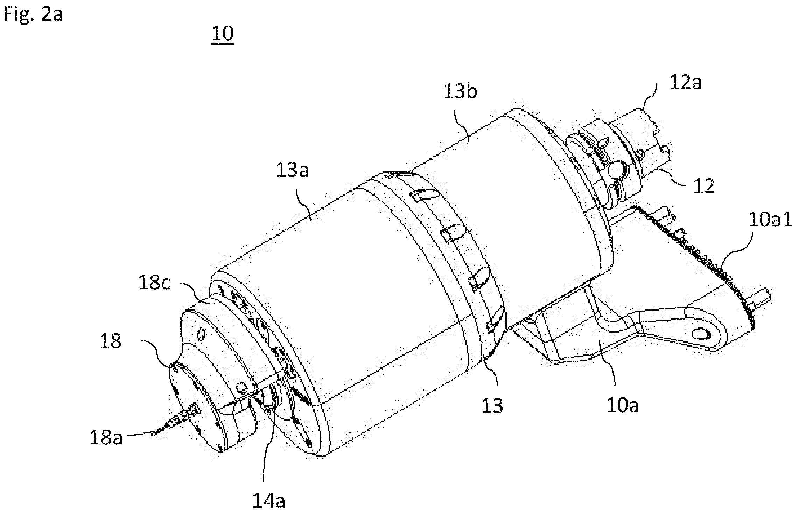

Fig. 2a zeigt ein zweites Ausführungsbeispiel einer Vorsatzspindelvorrichtung 10, wobei gleiche bzw. entsprechende Merkmale bzw. Baugruppen der Vorsatzspindelvorrichtung 10 mit gleichen Bezugszeichen benannt sind, wie die aus Figs.1a und 1b. In der folgenden Beschreibung wird insbesondere auf weitere Merkmale eingegangen und gleiche bzw. ähnliche Merkmale werden nicht neu beschrieben.

Die Vorsatzspindelvorrichtung 10 umfasst beispielhaft einen Andockabschnitt 10a, der zum Andocken der Vorsatzspindelvorrichtung 10 an einer Werkzeugmaschine eingerichtet ist. Der Andockabschnitt 10a umfasst beispielhaft mehrere Anschlusselemente 10a1, die beim Verbinden der Vorsatzspindelvorrichtung 10 mit der Werkzeugmaschine mit entsprechenden Kontakten bzw. Anschlüssen der Werkzeugmaschine zusammenwirken.

Durch den Andockabschnitt 10a kann die Vorsatzspindelvorrichtung 10 an der Werkzeugmaschine bzw. der Arbeitsspindel der Werkzeugmaschine angedockt werden, z.B. derart, dass die Vorsatzspindelvorrichtung 10 über die Werkzeugmaschine bzw. deren Maschinensteuerung steuerbar ist.

Hierzu umfassen die Anschlusselemente 10a1 beispielsweise elektrische Kontakte zur Stromversorgung und zur Signalübertragung von Steuersignalen (z.B. für Antriebe, Motoren und/oder andere elektrische bzw. elektromagnetische bzw. piezoelektrische Aktoren bzw. Aktuatoren) bzw. ggf. auch zur Rückübertragung von etwaigen Sensor- bzw. Sensoriksignalen an die Maschinensteuerung.

Die Anschlusselemente 10a1 umfassen beispielsweise weiterhin elektrische, pneumatische und/oder hydraulische Anschlüsse für die Vorsatzspindelvorrichtung 10.

Durch den Andockabschnitt 10a können beispielsweise die Vorsatzspindelvorrichtung 10, die Vorsatzspindeleinheit 14, die Spindel 14a und die Auswerfereinheit 18 versorgt werden. Beispielsweise kann der Andockabschnitt 10a auch derart eingerichtet sein, dass die Vorsatzspindelvorrichtung über den Andockabschnitt 10a mit Kühlmittel versorgt wird.

Die Auswerfereinheit 18 ist beispielhaft über eine Haltereinheit 18c an der ersten Gehäusehälfte 13a der Vorsatzspindelvorrichtung 10 verbunden. Über die Haltereinheit 18c kann die Auswerfereinheit 18 gehalten werden und ggf. zudem beispielsweise mit Strom und Steuersignalen versorgt werden bzw. angesteuert werden.

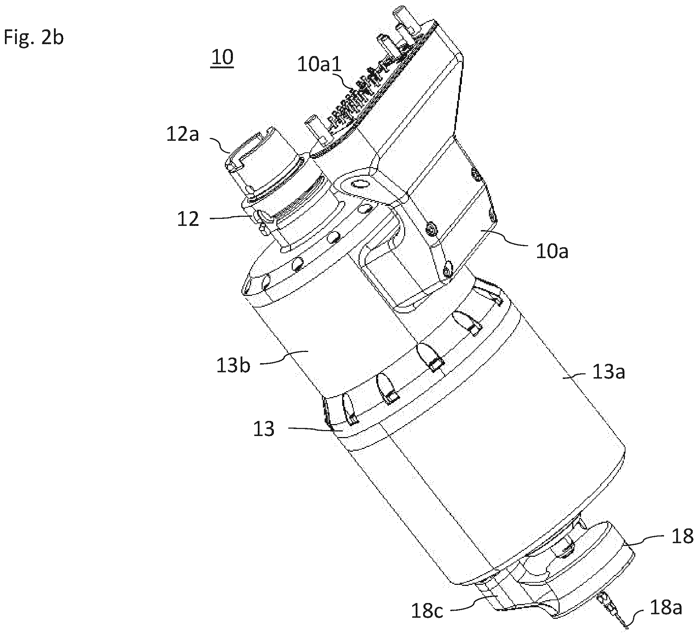

Fig. 2b zeigt die Vorsatzspindelvorrichtung 10 des zweiten Ausführungsbeispiels aus einer anderen Perspektive als in Fig. 2a. Die Vorsatzspindelvorrichtung 10 umfasst den Andockabschnitt 10a mit den Anschlusselementen 10a1, wie bereits in Fig. 2a beschrieben.

Der Andockabschnitt 10a ist beispielsweise seitlich an der zweiten Gehäusehälfte 13b der Vorsatzspindelvorrichtung 10 angeordnet. Der Andockabschnitt 10a ist bespielhaft rechtwinklig zu der zweiten Gehäusehälfte mit dieser verbunden, wobei der Andockabschnitt 10a beispielhaft L-förmig ausgebildet ist, derart, dass die Anschlusselemente 10a1 beispielhaft parallel zu der Spindel 14a ausgerichtet sind.

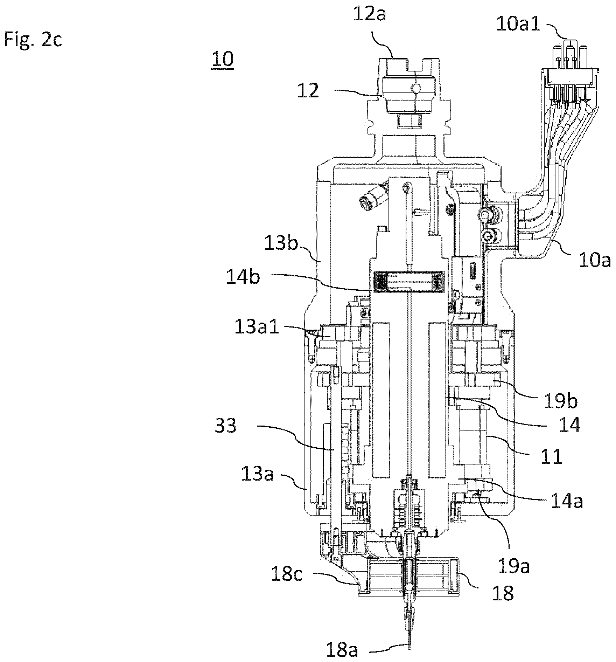

**Fig. 2c** zeigt die Vorsatzspindelvorrichtung 10 aus Fig. 2a und 2b in einem Querschnitt. Die Vorsatzspindelvorrichtung umfasst die Vorsatzspindeleinheit 14 mit der Spindel 14. Die Spindel 14 umfasst beispielhaft einen Aktuator 14b, der beispielweise zur Erzeugung einer Ultraschallbewegung bzw. Ultraschallschwingung der Spindel 14 eingerichtet ist. Der Aktuator 14b ist beispielhaft derart eingerichtet, dass die Spindel 14a als Ultraschallspindel ausgebildet ist. Der Aktuator 14b kann beispielsweise Piezoaktuatoren umfassen.

Beispielsweise ist die Vorsatzspindelvorrichtung derart eingerichtet, dass der Führungsstab 33 so angeordnet ist, dass dieser an der Zwischenplatte 13a1 und an der Haltereinheit 18c befestigt ist. Durch die Verbindung der Haltereinheit 18c mit dem Führungsstab 33 ist die Auswerfereinheit 18 vorteilhaft stabilisiert.

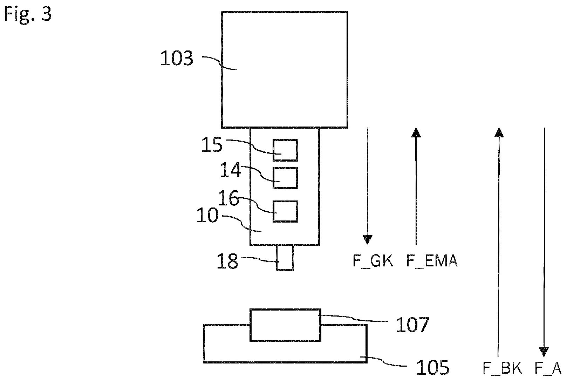

**Fig. 3** zeigt die Vorsatzspindelvorrichtung 10 nach einem der Ausführungsbeispiele aus den Figs. 1a, 1b bzw. 2a, 2b und 2c, die beispielhaft an einer Arbeitsspindel 103 einer Werkzeugmaschine eingespannt ist. Die Arbeitsspindel 103 mit eingespannter Vorsatzspindelvorrichtung 10 ist beispielsweise bei einem Bohrprozess vertikal angeordnet. Die Vorsatzspindeleinheit 14 ist frei beweglich in der Vorsatzspindelvorrichtung 10 eingerichtet, sodass eine Gewichtskraft F_GK auf die Vorsatzspindeleinheit 14 wirkt. Der elektromagnetischen Aktuator 16 der Vorsatzspindelvorrichtung 10 übt eine Ausgleichskraft F_EMA auf die Vorsatzspindeleinheit 14 aus, um der Gewichtskraft F_GK entgegenzuwirken. Der Betrag der Ausgleichskraft F_EMA des elektromagnetischen Aktuator 16 beträgt einen Wert, der die Gewichtskraft F_GK dermaßen entgegenwirkt, dass die Vorsatzspindeleinheit 14 in einen Schwebezustand gesetzt wird.

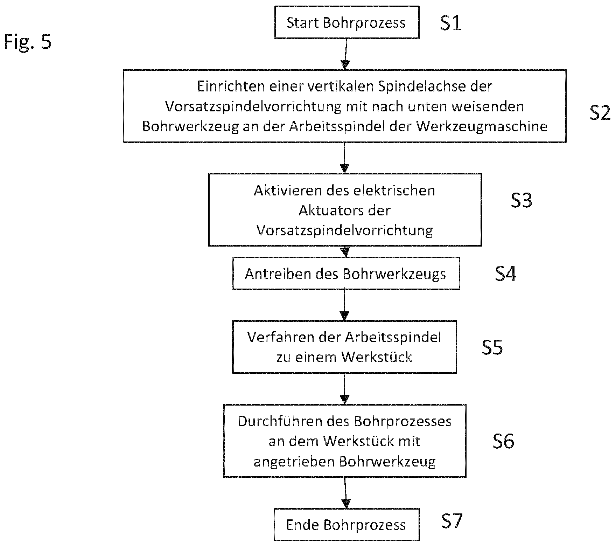

Bei einem Bohrprozess (siehe z.B. Fig. 5, insbesondere Schritt S6) wird die Arbeitsspindel 103 mit der Vorsatzspindelvorrichtungen 10, in der ein Werkzeug, beispielsweise ein Hohlbohrer 18a, eingespannt ist, durch die Arbeitsspindel 103 in Richtung eines Werkstücks 107 verfahren, welches auf einem Werkstücktisch 105 eingespannt ist.

Wenn die Werkzeugmaschine zum Bohren an das Werkstück anfährt und aufsetzt, wirkt eine Bohrkraft F_BK auf die Vorsatzspindelvorrichtung 10. Der Antrieb 15 der Vorsatzspindelvorrichtung 10 übt eine Kraft F_A auf die Vorsatzspindeleinheit 14 aus, um der Bohrkraft F_BK entgegenzuwirken. Die Kraft, die durch den Antrieb 15 ausgeübt wird, ist vordefinierbar und ist so groß, dass der Antrieb 15 der Bohrkraft F_BK entgegenwirkt und Bohrungen mittels der Kraft F_A des Antriebs 15 gebohrt werden können. Die Kraft F_A ist einstellbar und kann somit für verschiedenste Werkstücke angepasst werden.

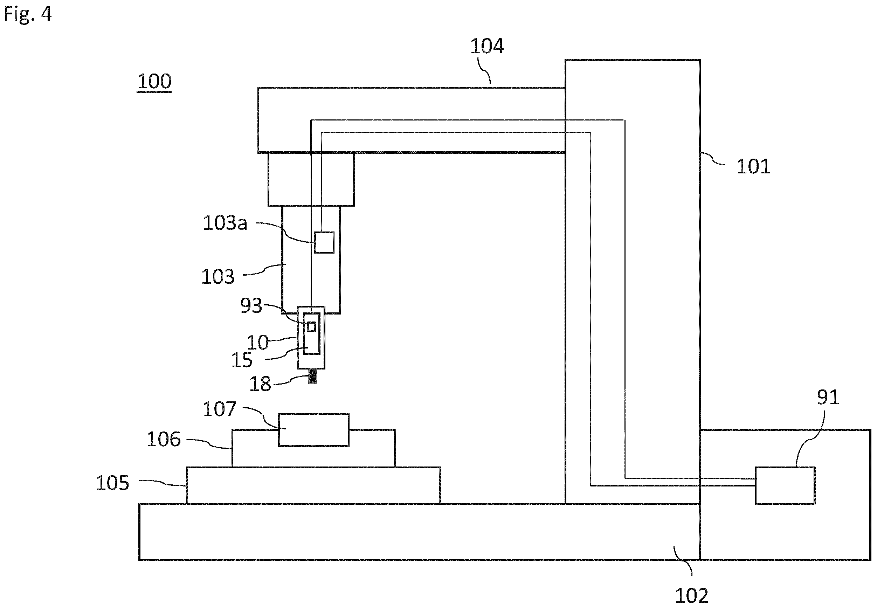

**Fig. 4** zeigt eine numerisch gesteuerte Werkzeugmaschine 100 mit einer Arbeitsspindel 103, wobei an der Arbeitsspindel 103 eine Vorsatzspindelvorrichtung 10 aufgenommen ist. Die Vorsatzspindelvorrichtung 10 ist beispielsweise eine der Vorsatzspindelvorrichtungen 10, die in den Figuren 1a, 1b bzw. 2a, 2b, 2c und 3 dargestellt sind. Komponenten der Vorsatzspindelvorrichtung 10, die gleich der Komponenten der Vorsatzspindelvorrichtung 10 aus Fig. 1a, 1b bzw. 2a, 2b, 2c und 3 sind, besitzen gleiche Bezugszeichen.

Die Werkzeugmaschine 100 umfasst ein Maschinenbett 102 und einen auf dem Maschinenbett 102 angeordneten Maschinenständer 101. Der Maschinenständer 101 kann beispielsweise auf dem Maschinenbett 102 in einer oder in mehreren Richtungen verfahrbar angeordnet sein. An dem Maschinenständer 101 ist ein Arbeitsspindelträger 104 angeordnet, der die Arbeitsspindel 103 trägt. Der Arbeitsspindelträger 104 kann beispielsweise in einer oder in mehreren Richtungen verfahrbar sein. Die Arbeitsspindel 103 wird durch einen Antrieb 103a angetrieben. Die Werkzeugmaschine 100 umfasst weiterhin einen Werkstücktisch 105, der auf dem Maschinenbett 102 angeordnet ist, mit einer Werkstückspanneinrichtung 106, in der ein Werkstück 107 eingespannt ist. Der Werkstücktisch 105 kann beispielsweise als ein Rundtisch oder als ein Schwenkrundtisch ausgebildet sein. Der Werkstücktisch 105 kann auf dem Maschinebett 102 in einer oder in mehreren Richtungen verfahrbar angeordnet sein.

Die Werkzeugmaschine 100 umfasst eine Steuereinrichtung 91, die dazu eingerichtet ist, dass die Arbeitsspindel 103 in axialer Richtung eine Vorschubbewegung ausführt. Die Steuereinrichtung 91 steuert den Antrieb 103a der Arbeitsspindel 103. Die Arbeitsspindel 103 ist beispielsweise vertikal eingerichtet, sodass die an der Arbeitsspindel 103 eingespannte Vorsatzspindelvorrichtung 10 vertikal angeordnet ist. Die Arbeitsspindel 103 und die Vorsatzspindelvorrichtung 10 sind parallel zueinander ausgerichtet. Die Steuereinrichtung 91 steuert, dass die Arbeitsspindel 103 in Richtung der Spindelachse der Arbeitsspindel 103 bewegbar ist.

Die Vorsatzspindelvorrichtung 10 umfasst eine Übertragungseinheit 93, die Signale an die Steuereinrichtung 91 der Werkzeugmaschine 100 überträgt. Bei einer Kraftausübung auf die Vorsatzspindeleinheit 14 der Vorsatzspindelvorrichtung 10 mittels des Antriebs 15, die beispielsweise durch eine Verschiebung und/oder einer Wegänderung der Vorsatzspindeleinheit 14 detektiert wird, überträgt die Übertragungseinheit 93 ein Regelungssignal an die Steuereinrichtung 91 der Werkzeugmaschine 100. Die Steuereinrichtung 91 empfängt das Regelungssignal der Übertragungseinheit 93 der Vorsatzspindelvorrichtung 10 und steuert die Arbeitsspindel 103 der Werkzeugmaschine 100, um auf die Verschiebung und/oder der Wegänderung dahingehend zu reagieren, sodass die Verschiebung und/oder Wegänderung ausgeglichen wird.

Bei einem Bohrprozess wird beispielhaft die Vorsatzspindeleinheit 14 der Vorsatzspindelvorrichtung 10 durch den elektromagnetischen Aktuator 16 in dem Schwebezustand gehalten. Im nächsten Schritt fährt die Arbeitsspindel 103 der Werkzeugmaschine 100 an das auf dem Werkstücktisch 105 angeordnete Werkstück 107 und beginnt den Bohrprozess. Beim Auflegen des Hohlbohrers 18a auf das Werkstück wirkt die am Antrieb 15 der Vorsatzspindelvorrichtung 10 vordefinierte Kraft auf das Werkstück 107 zum Bohren von Bohrungen. Die vordefinierte Kraft wird durch ein Einstellsignal, insbesondere ein Sollwert angebendes Einstellsignal, von der Steuereinrichtung 91 der Werkzeugmaschine 100 an die Übertragungseinheit 93 der Vorsatzspindelvorrichtung 10 übertragen, wobei der Antrieb 15 eingerichtet ist, die auf Grundlage des Einstellsignals vordefinierte Kraft auszuüben. Wenn beim Bohrprozess des Hohlbohrers 18a eine Gegenkraft, die zum Beispiel durch das Werkstück 107 selbst ausgeübt wird, die vordefinierte Kraft am Antrieb 15 der Vorsatzspindelvorrichtung 10 übersteigt, dann überträgt die Übertragungseinheit 93 das Regelungssignal an die Steuereinrichtung 91 der Werkzeugmaschine 100 und die Steuereinrichtung 91 steuert den Antrieb 103a der Arbeitsspindel 103 zum Reduzieren der Vorschubbewegung.

Nachdem die Vorsatzspindeleinheit 14 durch den elektromagnetischen Aktuator 16 in den Schwebezustand gebracht wurde und die Steuereinrichtung 91 die vordefinierte Kraft an die Übertragungseinheit 93 der Vorsatzspindelvorrichtung 10 übertragen hat, die durch den Antrieb 15 der Vorsatzspindelvorrichtung 10 ausgeübt wird, wird der Bohrprozess durchgeführt. Durch die Steuerung mittels der Steuereinrichtung 91 der Werkzeugmaschine 100 und der Übertragungseinheit 93 der Vorsatzspindelvorrichtung 10 kann der Bohrprozess mittels der Vorsatzspindelvorrichtung 10 kontrolliert werden und Störungen im Bohrprozess vermieden werden. So wird bespielhaft durch eine Wegänderung an dem Antrieb 15 der Vorsatzspindelvorrichtung 10 ein Kraftbetrag gemessen, der an die Steuerungseinrichtung 91 der Werkzeugmaschine 100 durch die Übertragungseinheit 93 der Vorsatzspindelvorrichtung 10 übertragen wird, wobei darauf der Antrieb 103a der Arbeitsspindel 103 der Werkzeugmaschine 100 angesteuert werden kann, um auf diese Wegänderung zu reagieren.

**Fig. 5** zeigt ein beispielhaftes Flussdiagramm zur Darstellung eines Verfahrens zum Steuern eines mit einer Vorsatzspindelvorrichtung 10 durchgeführten Bohrprozesses an einer Werkzeugmaschine 100 mit einer Arbeitsspindel 103. Die Werkzeugmaschine kann beispielsweise die Werkzeugmaschine 100 aus Fig. 4 sein, kann aber auch jede beliebige steuerbare Werkzeugmaschine sein, die eine Vorsatzspindelvorrichtung 10 an einer Arbeitsspindel eingespannt hat.

Beispielhaft wird der Bohrprozess in Schritt S1 gestartet. Der Bohrprozess umfasst einen Schritt S2 des Einrichtens der beispielhaft vertikal orientierten Spindelachse der Vorsatzspindelvorrichtung mit nach unten weisendem Bohrwerkzeug an der Arbeitsspindel der Werkzeugmaschine. Hierbei wird die Vorsatzspindelvorrichtung 10 beispielhaft in eine vertikale Position gebracht. Die Spindelachse der Vorsatzspindelvorrichtung 10 wird vertikal ausgerichtet, sodass beispielsweise der an der Vorsatzspindelvorrichtung 10 eingespannte Hohlbohrer 18a an der Arbeitsspindel 103 der Werkzeugmaschine 100 nach unten gerichtet ist.

In einem weiteren Schritt S3 wird der elektromagnetische Aktuator 16 der Vorsatzspindelvorrichtung 10 aktiviert. Dabei wird ein Magnetfeld, welches beispielsweise durch Anlegen einer Spannung induziert wird, beispielhaft derart eingerichtet, dass die Vorsatzspindeleinheit 14 der Vorsatzspindelvorrichtung 10 in den Schwebezustand gebracht wird. Da die Vorsatzspindelvorrichtung 10 vertikal ausgerichtet wurde, wird die Vorsatzspindeleinheit 14 von der Schwerkraft nach unten gedrückt. Das durch den elektromagnetischen Aktuator 16 entstandene Magnetfeld übt die Ausgleichskraft auf die Vorsatzspindeleinheit 14 nach oben aus, um die Gewichtskraft auszugleichen, sodass die Vorsatzspindeleinheit 14 in den Schwebezustand gebracht wird.

In einem weiteren Schritt S4 wird ein an der Spindel 14a der Vorsatzspindelvorrichtung 10 eingespanntes Bohrwerkzeug (beispielsweise der Hohlbohrer 18a aus Fig. 1b) angetrieben.

In einem weiteren Schritt S5 wird die Arbeitsspindel 103 der Werkzeugmaschine mit der daran aufgenommenen Vorsatzspindelvorrichtung 10 mit Bohrwerkzeug zu dem Werkstück 107 verfahren, beispielsweise vertikal nach unten.

In einem weiteren Schritt S6 wird der Bohrprozess an dem Werkstück mit dem von der Spindel 14a der Vorsatzspindelvorrichtung 10 angetriebenen Bohrwerkzeug durchgeführt.

Dabei wird im Schritt S6 die Vorschubbewegung der Arbeitsspindel 103 der Werkzeugmaschine 100 derart gesteuert, dass das Bohrwerkzeug zunächst in Richtung des Werkstücks 107 (Bohrvorgang) und dann ggf. wieder vom Werkstück 107 weg verfährt.

Bei der Vorschubbewegung ist der elektromagnetische Aktuator 16 aktiviert, sodass die Vorsatzspindeleinheit 14 in dem Schwebezustand gehalten wird. Dabei übt der elektromagnetische Aktuator 16 die Ausgleichskraft auf die Vorsatzspindeleinheit 14 aus, um die auf der Vorsatzspindeleinheit 14 wirkende Kraft auszugleichen. Beim Bohrprozess wird die durch die Steuerungseinheit 91 vordefinierte Kraft durch den Antrieb 15 der Vorsatzspindelvorrichtung 10 ausgeübt und somit in das Werkstück 107 gebohrt.

Die oben beschriebenen Schritte des Verfahrens müssen nicht in der oben beschriebenen Reihenfolge ausgeführt werden, sondern können in verschiedensten Variationen durchgeführt werden und können zudem mehrmals stattfinden.

Das Verfahren kann zudem durch ein Computerprogrammprodukt ausgeführt werden, das Befehle umfasst, die bei der Ausführung des Programms durch einen mit der numerisch gesteuerten Werkzeugmaschine 100 verbundenen Computer bzw. der Steuereinrichtung 91 der numerisch gesteuerten Werkzeugmaschine 100 zum Steuern eines mit der Vorsatzspindelvorrichtung 10 durchgeführten Bohrprozesses an der Werkzeugmaschine 100 mit der Arbeitsspindel 103 das Verfahren auszuführen.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der Ansprüche umfasst sind.

## Patentansprüche

1. Eine Vorsatzspindelvorrichtung zum Einsatz an einer Werkzeugmaschine (100), umfassend:
- eine Einspannschnittstelle (12) zum Einspannen der Vorsatzspindelvorrichtung an einer Arbeitsspindel (103) der Werkzeugmaschine (100);
- eine Vorsatzspindeleinheit (14) mit einer Spindel (14a) zum Antreiben eines an der Spindel (14a) eingespannten Bohrwerkzeugs; und
- einen Antrieb (15) zum Ausüben einer Kraft auf die Vorsatzspindeleinheit (14), und einen elektromagnetischen Aktuator (16) zum Ausüben einer der Kraft des Antriebs (15) entgegengesetzten Ausgleichskraft auf die Vorsatzspindeleinheit (14).

2. Vorsatzspindelvorrichtung gemäß Anspruch 1, **dadurch gekennzeichnet, dass**
der elektromagnetische Aktuator (16) dazu eingerichtet ist, eine der Gewichtskraft der Vorsatzspindeleinheit (14) entsprechenden Ausgleichskraft auszuüben, wenn die Vorsatzspindelvorrichtung mit vertikaler Spindelachse und nach unten weisendem Bohrwerkzeug an der Arbeitsspindel (103) der Werkzeugmaschine (100) eingespannt ist, und/oder
der elektromagnetische Aktuator (16) dazu eingerichtet ist, eine der Gewichtskraft der Vorsatzspindeleinheit (14) entsprechenden Ausgleichskraft auszuüben, derart, dass die Vorsatzspindeleinheit (14) in eine Schwebestellung gebracht wird, wenn die Vorsatzspindelvorrichtung mit vertikaler Spindelachse und nach unten weisendem Bohrwerkzeug an der Arbeitsspindel (103) der Werkzeugmaschine (100) eingespannt ist.

3. Vorsatzspindelvorrichtung gemäß einem der vorstehenden Ansprüche, **gekennzeichnet durch**
ein Gehäuse (13), in dem die Vorsatzspindeleinheit (14) parallel zur Spindelachse der Spindel (14a) beweglich gelagert ist, wobei
die Vorsatzspindeleinheit (14) an parallel zur Spindelachse der Spindel (14a) verlaufenden Führungen beweglich gelagert ist.

4. Vorsatzspindelvorrichtung gemäß Anspruch 3, **dadurch gekennzeichnet, dass**
die Spindel (14a) eine auf einer Seite des Gehäuses (13) offen zugängige Werkzeugaufnahme (21) zur Aufnahme des Bohrwerkzeugs aufweist, und die Einspannschnittstelle (12) an der der Werkzeugaufnahme (21) der Spindel (14a) gegenüberliegenden Seite des Gehäuses (13) angeordnet ist, wobei
der Antrieb (15) dazu dient, die Kraft auf die Vorsatzspindeleinheit (14) in einer Richtung parallel zur Spindelachse der Spindel (14a) auszuüben, insbesondere weg von der Einspannschnittstelle (12) und/oder hin zu der Werkzeugaufnahme (21) der Spindel (14a), und der elektromagnetische Aktuator (16) dazu dient, die Ausgleichskraft auf die Vorsatzspindeleinheit (14) in einer Richtung parallel zur Spindelachse der Spindel (14a) auszuüben, insbesondere hin zu der Einspannschnittstelle (12) und/oder weg von der Werkzeugaufnahme (21) der Spindel (14a).

5. Vorsatzspindelvorrichtung gemäß einem der vorstehenden Ansprüche, **dadurch gekennzeichnet, dass**
die Einspannschnittstelle (12) derart angeordnet ist, dass die Spindelachse der Spindel (14a) mit der Spindelachse der Arbeitsspindel (103) der Werkzeugmaschine (100) parallel, insbesondere koaxial, ausgerichtet ist, wenn die Einspannschnittstelle (12) an der Arbeitsspindel (103) der Werkzeugmaschine (100) eingespannt ist und/oder die Einspannschnittstelle (12) eine Hohlschaftkegel-Werkzeugschnittstelle aufweist.

6. Vorsatzspindelvorrichtung gemäß einem der vorstehenden Ansprüche, **dadurch gekennzeichnet, dass**
der Antrieb (15) einen Linearmotor umfasst, der dazu eingerichtet ist, die Vorsatzspindeleinheit (14) zur Ausübung der Kraft zu verfahren und/oder
der Antrieb (15) eine Positionsmesseinrichtung aufweist, die dazu eingerichtet ist, eine Position des Antriebs (15) und/oder eine Wegänderung des Antriebs (15) zu ermitteln.

7. Vorsatzspindelvorrichtung gemäß einem der vorstehenden Ansprüche, **gekennzeichnet durch**
eine Übertragungseinheit (93) zum Übertragen von Signalen an eine Steuereinrichtung (91) der Werkzeugmaschine (100), die dazu eingerichtet ist, eine Vorschubbewegung der Arbeitsspindel (103) der Werkzeugmaschine (100) in Richtung der Spindelachse der Arbeitsspindel (103) zu steuern, und
die Übertragungseinheit (93) dazu eingerichtet ist, ein Regelungssignal an die Steuereinrichtung (91) der Werkzeugmaschine (100) zu übertragen, wobei das Regelungssignal eine auf die Vorsatzspindeleinheit (14) wirkende Gesamtkraft und/oder eine Position bzw. Wegänderung der Vorsatzspindeleinheit (14) und/oder des Antriebs (15) angibt, und ebenfalls dazu eingerichtet ist, ein Einstellsignal, insbesondere ein Sollwert angebendes Einstellsignal, von der Steuereinrichtung (91) der Werkzeugmaschine (100) zu empfangen, wobei der Antrieb (15) dazu eingerichtet ist, die auf Grundlage des Einstellsignals eingestellte Kraft auf die Vorsatzspindeleinheit (14) auszuüben.

8. Vorsatzspindelvorrichtung gemäß einem der vorstehenden Ansprüche, **dadurch gekennzeichnet, dass**
die Spindel (14a) einen Ultraschallerzeuger aufweist, der dazu eingerichtet ist, eine Ultraschallschwingung der Spindel (14a) zu erzeugen, insbesondere parallel zur Spindelachse der Spindel (14a) und/oder
die Spindel (14a) eine innere Kühlmittelzufuhrleitung (17), insbesondere als Bohrung ausgebildet, zum Leiten von Kühlmittel umfasst.

9. Vorsatzspindelvorrichtung gemäß einem der vorstehenden Ansprüche, **dadurch gekennzeichnet, dass**
die Vorsatzspindelvorrichtung ein Gehäuse (13) mit einer ersten Gehäusehälfte (13a) und einer zweiten Gehäusehälfte (13b) umfasst, wobei die Vorsatzspindeleinheit (14) und der elektromagnetische Aktuator (16) in der ersten Gehäusehälfte (13a) angeordnet sind, und
die Vorsatzspindelvorrichtung einen ersten Endabschnitt (12a) und einen zweiten Endabschnitt (12b) umfasst,
wobei zwischen der ersten Gehäusehälfte (13a) und der zweiten Gehäusehälfte (13b) eine Zwischenplatte (13a1) angeordnet ist, und
wobei in der ersten Gehäusehälfte (13a) Führungsstäbe (33) von der Zwischenplatte (13a1) zum zweiten Endabschnitt (12b) zum Führen der Vorsatzspindeleinheit (14) in der ersten Gehäusehälfte (13a) angeordnet sind.

10. Vorsatzspindelvorrichtung gemäß einem der vorstehenden Ansprüche, **dadurch gekennzeichnet, dass**
die Vorsatzspindeleinheit (14) eine erste Platte (19a) und eine zweite Platte (19b) aufweist, und
die Vorsatzspindeleinheit (14) weiterhin mindestens einen zwischen der ersten Platte (19a) und der zweiten Platte (19b) angeordneten Hohlzylinder (11) zum Verbinden der beiden Platten (19a, 19b) aufweist,
wobei die Spindel (14a) an der ersten Platte (19a) befestigt ist und der mindestens eine Hohlzylinder (11) radialsymmetrisch um die Spindel (14a) angeordnet ist, und
der Antrieb (15) in der zweiten Gehäusehälfte (13b) angeordnet ist und einen Läufer (15a) zum Verfahren der Spindel (14a) parallel zu der Spindelachse der Spindel (14a) umfasst,
wobei der Läufer (15a) des Antriebs (15) an der zweiten Platte (19b) der Vorsatzspindeleinheit (14) befestigt ist.

11. Vorsatzspindelvorrichtung gemäß einer der vorstehenden Ansprüche, **dadurch gekennzeichnet, dass**
der elektromagnetische Aktuator (16) einen Stator (16b) und einen Läufer (16a) umfasst,
wobei der Stator (16b) des elektromagnetischen Aktuators (16) an der Vorsatzspindeleinheit (14) angeordnet ist und der Läufer (16a) des elektromagnetischen Aktuators (16) an dem Gehäuse (13) und der Zwischenplatte (13a1) angeordnet ist.

12. System umfassend:
- eine numerisch gesteuerte Werkzeugmaschine (100) mit einer Arbeitsspindel (103), und
- eine an der Arbeitsspindel (103) aufgenommene Vorsatzspindelvorrichtung gemäß einem der vorstehenden Ansprüche.

13. System gemäß Anspruch 12, **dadurch gekennzeichnet, dass**
die Werkzeugmaschine (100) eine Steuereinrichtung (91) umfasst, die dazu eingerichtet ist, eine Vorschubbewegung der Arbeitsspindel (103) der Werkzeugmaschine (100) in Richtung der Spindelachse der Arbeitsspindel (103) zu steuern, und
die Vorsatzspindelvorrichtung eine Übertragungseinheit (93) zum Übertragen von Signalen an die Steuereinrichtung (91) der Werkzeugmaschine (100) aufweist, und
die Übertragungseinheit (93) dazu eingerichtet ist, ein Regelungssignal an die Steuereinrichtung (91) der Werkzeugmaschine (100) zu übertragen, wobei das Regelungssignal eine auf die Vorsatzspindeleinheit (14) wirkende Gesamtkraft und/oder eine Position bzw. Wegänderung der Vorsatzspindeleinheit (14) und/oder des Antriebs (15) angibt, und
die Steuereinrichtung (91) der Werkzeugmaschine (100) dazu eingerichtet ist, eine Vorschubgeschwindigkeit der Arbeitsspindel (103) auf Grundlage des von der Übertragungseinheit (93) der Vorsatzspindelvorrichtung empfangenen Regelungssignals zu steuern bzw. zu regeln, und
die Steuereinrichtung (91) der Werkzeugmaschine (100) dazu eingerichtet ist, ein eine gewünschte Kraft angebendes Einstellsignal insbesondere ein Sollwert angebendes Einstellsignal, an die Übertragungseinheit (93) der Vorsatzspindelvorrichtung zu übertragen,
wobei die Übertragungseinheit (93) dazu eingerichtet ist, das Einstellsignal von der Steuereinrichtung (91) der Werkzeugmaschine (100) zu empfangen, wobei der Antrieb (15) dazu eingerichtet ist, die auf Grundlage des Einstellsignals eingestellte Kraft auf die Vorsatzspindeleinheit (14) auszuüben.

14. Verfahren zum Steuern eines mit einer Vorsatzspindelvorrichtung gemäß einem der Ansprüche 1 bis 11 durchgeführten Bohrprozesses an einer Werkzeugmaschine (100) mit einer Arbeitsspindel (103), umfassend:
- Aktivieren des elektromagnetischen Aktuator (16) der Vorsatzspindelvorrichtung zum Ausüben der Ausgleichskraft auf die Vorsatzspindeleinheit (14) der Vorsatzspindelvorrichtung, wenn die Vorsatzspindelvorrichtung mit vertikaler Spindelachse und nach unten weisendem Bohrwerkzeug an der Arbeitsspindel (103) der Werkzeugmaschine (100) eingespannt ist;
- Antreiben des an der Spindel (14a) der Vorsatzspindelvorrichtung eingespannten Bohrwerkzeugs;
- Verfahren der Arbeitsspindel (103) zu einem Werkstück (107);
- Durchführen des Bohrprozesses an dem Werkstück (107) mit dem von der Spindel (14a) der Vorsatzspindelvorrichtung angetriebenen Bohrwerkzeug, umfassend das Steuern einer Vorschubbewegung der Arbeitsspindel (103) in Bohrrichtung bei aktiviertem elektromagnetischen Aktuator (16) der Vorsatzspindelvorrichtung und bei Ausüben der der Ausgleichskraft des elektromagnetischen Aktuators (16) entgegengesetzten Kraft durch den Antrieb (15) der Vorsatzspindelvorrichtung.

15. Computerprogrammprodukt, umfassend Befehle, die bei der Ausführung des Programms durch einen mit einer numerisch gesteuerten Werkzeugmaschine (100) verbundenen Computer bzw. eine Steuereinrichtung (91) einer numerisch gesteuerten Werkzeugmaschine (100) diesen bzw. diese veranlassen, das Verfahren gemäß Anspruch 14 auszuführen.

## Claims

1. An attachment spindle device for use on a machine tool (100), comprising:
- a clamping interface (12) for clamping said attachment spindle device on a work spindle (103) of said machine tool (100);
- an attachment spindle unit(14) with a spindle (14a) for driving a drilling tool clamped on said spindle (14a); and
- a drive (15) for exerting a force on said attachment spindle unit (14), and
an electromagnetic actuator (16) for exerting a counterbalancing force opposite to the force of said drive (15) on said attachment spindle unit (14).

2. The attachment spindle device according to claim 1, **characterized in that**
said electromagnetic actuator (16) is configured to exert a counterbalancing force corresponding to the weight of said attachment spindle unit (14) when said attachment spindle device is clamped on said work spindle (103) of said machine tool (100) with the spindle axis being vertical and the drilling tool pointing downward, and/or
said electromagnetic actuator (16) is configured to exert a counterbalancing force corresponding to the weight of said attachment spindle unit (14) such that said attachment spindle unit (14) is brought into a suspended position when said attachment spindle device is clamped on said work spindle (103) of said machine tool (100) with the spindle axis being vertical and the drilling tool pointing downward.

3. The attachment spindle device according to one of the preceding claims, **characterized by**
a housing (13) in which said attachment spindle unit (14) is mounted to be movable in parallel to said spindle axis of said spindle (14a), wherein
said attachment spindle unit (14) is mounted to be movable on guides extending in parallel to the spindle axis of said spindle (14a).

4. The attachment spindle device according to claim 3, **characterized in that**
said spindle (14a) includes a tool receptacle (21) openly accessible on one side of said housing (13) for receiving the drilling tool, and
said clamping interface (12) is arranged on the side of said housing (13) opposite said tool receptacle (21) of said spindle (14a), wherein
said drive (15) serves to exert the force on said attachment spindle unit (14) in a direction parallel to the spindle axis of said spindle (14a), in particular away from said clamping interface (12) and/or towards said tool receptacle (21) of said spindle (14a), and said electromagnetic actuator (16) serves to exert the counterbalancing force on said attachment spindle unit (14) in a direction parallel to the spindle axis of said spindle (14a), in particular towards said clamping interface (12) and/or away from said tool receptacle (21) of said spindle (14a).

5. The attachment spindle device according to one of the preceding claims, **characterized in that**
said clamping interface (12) is arranged such that the spindle axis of said spindle (14a) is aligned in parallel, in particular coaxially, with the spindle axis of said working spindle (103) of said machine tool (100) when said clamping interface (12) is clamped on said working spindle (103) of said machine tool (100) and/or said clamping interface (12) includes a hollow shank taper tool interface.

6. The attachment spindle device according to one of the preceding claims, **characterized in that**
said drive (15) comprises a linear motor configured to move said attachment spindle unit (14) for exerting the force, and/or
said drive (15) includes a position measuring means configured to determine a position of said drive (15) and/or a distance change of said drive (15).

7. The attachment spindle device according to one of the preceding claims, **characterized by**
a transmission unit (93) for transmitting signals to a controller (91) of said machine tool (100), said transmission unit being configured to control a feed movement of said work spindle (103) of said machine tool (100) in the direction of the spindle axis of said work spindle (103), and
said transmission unit (93) being configured to transmit a control signal to said controller (91) of said machine tool (100), said control signal indicating a total force acting on said attachment spindle unit (14) and/or a position or distance change of said attachment spindle unit (14) and/or said drive (15), and said transmission unit (93) also being configured to receive a setting signal, in particular a setting signal indicating a target value, from said controller (91) of said machine tool (100), wherein said drive (15) is configured to exert the force set on the basis of the setting signal on said attachment spindle unit (14).

8. The attachment spindle device according to one of the preceding claims, **characterized in that**
said spindle (14a) includes an ultrasonic generator configured to generate an ultrasonic vibration of said spindle (14a), in particular in parallel to the spindle axis of said spindle (14a), and/or
said spindle (14a) comprises an inner coolant supply line (17), in particular in the form of a bore, for guiding coolant.

9. The attachment spindle device according to one of the preceding claims, **characterized in that**
said attachment spindle device includes a housing (13) with a first half of the housing (13a) and a second half of the housing (13b), wherein said attachment spindle unit (14) and said electromagnetic actuator (16) are arranged in said first half of the housing (13a), and
said attachment spindle device comprises a first end portion (12a) and a second end portion (12b),
wherein an intermediate plate (13a1) is arranged between said first half of the housing (13a) and said second half of the housing (13b), and
wherein guide rods (33) are arranged in said first half of the housing (13a) from said intermediate plate (13a1) to said second end portion (12b) for guiding said attachment spindle unit (14) in said first half of the housing (13a).

10. The attachment spindle device according to one of the preceding claims, **characterized in that**
said attachment spindle unit (14) includes a first plate (19a) and a second plate (19b), and
said attachment spindle unit (14) further includes at least one hollow cylinder (11) arranged between said first plate (19a) and said second plate (19b) for connecting the two plates (19a, 19b),
wherein said spindle (14a) is fastened to said first plate (19a) and said at least one hollow cylinder (11) is arranged radially symmetrically around said spindle (14a), and
said drive (15) is arranged in said second half of the housing (13b) and comprises a rotor (15a) for moving said spindle (14a) in parallel to the spindle axis of said spindle (14a),
wherein said rotor (15a) of said drive (15) is fastened to said second plate (19b) of said attachment spindle unit (14).

11. The attachment spindle device according to one of the preceding claims, **characterized in that**
said electromagnetic actuator (16) includes a stator (16b) and a rotor (16a),
wherein said stator (16b) of said electromagnetic actuator (16) is arranged on said attachment spindle unit (14) and said rotor (16a) of said electromagnetic actuator (16) is arranged on said housing (13) and said intermediate plate (13a1).

12. A system, comprising:
- a numerically controlled machine tool (100) with a work spindle (103), and
- an attachment spindle device according to one of the preceding claims received on said work spindle (103).

13. The system according to claim 12, **characterized in that**
said machine tool (100) comprises a controller (91) configured to control a feed movement of said work spindle (103) of said machine tool (100) in the direction of the spindle axis of said work spindle (103), and
said attachment spindle device includes a transmission unit (93) for transmitting signals to said controller (91) of said machine tool (100), and
said transmission unit (93) is configured to transmit a control signal to said controller (91) of said machine tool (100), said control signal indicating a total force acting on said attachment spindle unit (14) and/or a position or distance change of said attachment spindle unit (14) and/or said drive (15), and
said controller (91) of said machine tool (100) is configured to control or regulate a feed speed of said work spindle (103) on the basis of the control signal received from said transmission unit (93) of said attachment spindle device, and
said controller (91) of said machine tool (100) is configured to transmit a setting signal indicating a desired force, in particular a setting signal indicating a target value, to said transmission unit (93) of said attachment spindle device,
wherein said transmission unit (93) is configured to receive said setting signal from said controller (91) of said machine tool (100), said drive (15) being configured to exert the force set on the basis of said setting signal on said attachment spindle unit (14) .

14. A method for controlling a drilling process carried out with an attachment spindle device according to one of claims 1 to 11 on a machine tool (100) with a work spindle (103), comprising:
- activating said electromagnetic actuator (16) of said attachment spindle device for exerting the counterbalancing force on said attachment spindle unit (14) of said attachment spindle device when said attachment spindle device is clamped on said work spindle (103) of said machine tool (100) with the spindle axis being vertical and the drilling tool pointing downward;
- driving the drilling tool clamped on said spindle (14a) of said attachment spindle device;
- moving said work spindle (103) to a workpiece (107);
- performing the drilling process on said workpiece (107) with the drilling tool driven by said spindle (14a) of said attachment spindle device, comprising controlling a feed movement of said work spindle (103) in the drilling direction when said electromagnetic actuator (16) of said attachment spindle device is activated and when the force opposite the counterbalancing force of said electromagnetic actuator (16) is exerted by said drive (15) of said attachment spindle device.

15. A computer program product, comprising instructions that cause, when said program is executed by a computer connected to a numerically controlled machine tool (100) or a controller (91) of a numerically controlled machine tool (100), said computer or said controller to execute the method according to claim 14.

## Revendications

1. Dispositif de prolongement à broche destiné à être utilisé sur une machine-outil (100), comprenant :
- une interface de serrage (12) pour le serrage du dispositif de prolongement à broche sur une broche de travail (103) de la machine-outil (100) ;
- une unité de prolongement à broche (14) avec une broche (14a) pour l'entraînement d'un outil de perçage serré sur la broche (14a) ; et
- un entraînement (15) pour l'exercice d'une force sur l'unité de prolongement à broche (14), et un actionneur électromagnétique (16) pour l'exercice d'une force de compensation opposée à la force de l'entraînement (15) sur l'unité de prolongement à broche (14).

2. Dispositif de prolongement à broche selon la revendication 1, **caractérisé en ce que**
l'actionneur électromagnétique (16) est conçu pour exercer une force de compensation correspondant au poids de l'unité de prolongement à broche (14), lorsque le dispositif de prolongement à broche avec l'axe de broche vertical et l'outil de perçage orienté vers le bas est serré sur la broche de travail (103) de la machine-outil (100), et/ou
l'actionneur électromagnétique (16) est conçu pour exercer une force de compensation correspondant au poids de l'unité de prolongement à broche (14), de telle sorte que l'unité de prolongement à broche (14) est amenée dans une position en suspension, lorsque le dispositif de prolongement à broche avec l'axe de broche vertical et l'outil de perçage orienté vers le bas est serré sur la broche de travail (103) de la machine-outil (100).

3. Dispositif de prolongement à broche selon l'une quelconque des revendications précédentes, **caractérisé par**
un boîtier (13), dans lequel l'unité de prolongement à broche (14) est montée mobile parallèlement à l'axe de broche de la broche (14a), dans lequel
l'unité de prolongement à broche (14) est montée mobile sur des guidages s'étendant parallèlement à l'axe de broche de la broche (14a).

4. Dispositif de prolongement à broche selon la revendication 3, **caractérisé en ce que**
la broche (14a) présente un logement d'outil (21) accessible de manière ouverte sur une face du boîtier (13) pour le logement de l'outil de perçage, et
l'interface de serrage (12) est disposée sur la face du boîtier (13) opposée au logement d'outil (21) de la broche (14a), dans lequel
l'entraînement (15) sert à exercer la force sur l'unité de prolongement à broche (14) dans une direction parallèle à l'axe de broche de la broche (14a), en particulier à distance de l'interface de serrage (12) et/ou en direction du logement d'outil (21) de la broche (14a), et l'actionneur électromagnétique (16) sert à exercer la force de compensation sur l'unité de prolongement à broche (14) dans une direction parallèle à l'axe de broche de la broche (14a), en particulier en direction de l'interface de serrage (12) et/ou à distance du logement d'outil (21) de la broche (14a).

5. Dispositif de prolongement à broche selon l'une quelconque des revendications précédentes, **caractérisé en ce que**
l'interface de serrage (12) est disposée de telle sorte que l'axe de broche de la broche (14a) est orienté avec l'axe de broche de la broche de travail (103) de la machine-outil (100) parallèlement, en particulier de manière coaxiale, lorsque l'interface de serrage (12) est serrée sur la broche de travail (103) de la machine-outil (100) et/ou l'interface de serrage (12) présente une interface d'outil à cône à tige creuse.

6. Dispositif de prolongement à broche selon l'une quelconque des revendications précédentes, **caractérisé en ce que**
l'entraînement (15) comprend un moteur linéaire, qui est conçu pour déplacer l'unité de prolongement à broche (14) pour l'exercice de la force et/ou
l'entraînement (15) présente un dispositif de mesure de position, qui est conçu pour déterminer une position de l'entraînement (15) et/ou une modification de voie de l'entraînement (15).

7. Dispositif de prolongement à broche selon l'une quelconque des revendications précédentes, **caractérisé par**
une unité de transmission (93) pour la transmission de signaux à un dispositif de commande (91) de la machine-outil (100), qui est conçue pour commander un mouvement d'avance de la broche de travail (103) de la machine-outil (100) en direction de l'axe de broche de la broche de travail (103), et
l'unité de transmission (93) est conçue pour transmettre un signal de régulation au dispositif de commande (91) de la machine-outil (100), dans lequel le signal de régulation indique une force totale agissant sur l'unité de prolongement à broche (14) et/ou une position ou modification de voie de l'unité de prolongement à broche (14) et/ou de l'entraînement (15), et est également conçue pour recevoir un signal de réglage, en particulier un signal de réglage indiquant une valeur théorique, du dispositif de commande (91) de la machine-outil (100), dans lequel l'entraînement (15) est conçu pour exercer la force réglée sur la base du signal de réglage sur l'unité de prolongement à broche (14).

8. Dispositif de prolongement à broche selon l'une quelconque des revendications précédentes, **caractérisé en ce que**
la broche (14a) présente un générateur d'ultrasons, qui est conçu pour générer une vibration ultrasonore de la broche (14a), en particulier parallèlement à l'axe de broche de la broche (14a) et/ou
la broche (14a) comprend une conduite d'amenée de réfrigérant intérieure (17), en particulier réalisée sous la forme d'un trou, pour l'acheminement de réfrigérant.

9. Dispositif de prolongement à broche selon l'une quelconque des revendications précédentes, **caractérisé en ce que**
le dispositif de prolongement à broche comprend un boîtier (13) avec une première moitié de boîtier (13a) et une deuxième moitié de boîtier (13b), dans lequel l'unité de prolongement à broche (14) et l'actionneur électromagnétique (16) sont disposés dans la première moitié de boîtier (13a), et
le dispositif de prolongement à broche comprend une première partie d'extrémité (12a) et une deuxième partie d'extrémité (12b),
dans lequel une plaque intermédiaire (13a1) est disposée entre la première moitié de boîtier (13a) et la deuxième moitié de boîtier (13b), et
dans lequel des barres de guidage (33) de la plaque intermédiaire (13a1) à la deuxième partie d'extrémité (12b) pour le guidage de l'unité de prolongement à broche (14) dans la première moitié de boîtier (13a) sont disposées dans la première moitié de boîtier (13a).

10. Dispositif de prolongement à broche selon l'une quelconque des revendications précédentes, **caractérisé en ce que**
l'unité de prolongement à broche (14) présente une première plaque (19a) et une deuxième plaque (19b), et
l'unité de prolongement à broche (14) présente en outre au moins un cylindre creux (11) disposé entre la première plaque (19a) et la deuxième plaque (19b) pour la liaison des deux plaques (19a, 19b),
dans lequel la broche (14a) est fixée sur la première plaque (19a) et le au moins un cylindre creux (11) est disposé de manière radialement symétrique autour de la broche (14a), et
l'entraînement (15) est disposé dans la deuxième moitié de boîtier (13b) et comprend un rotor (15a) pour le déplacement de la broche (14a) parallèlement à l'axe de broche de la broche (14a),
dans lequel le rotor (15a) de l'entraînement (15) est fixé sur la deuxième plaque (19b) de l'unité de prolongement à broche (14).

11. Dispositif de prolongement à broche selon l'une quelconque des revendications précédentes, **caractérisé en ce que**
l'actionneur électromagnétique (16) comprend un stator (16b) et un rotor (16a),
dans lequel le stator (16b) de l'actionneur électromagnétique (16) est disposé sur l'unité de prolongement à broche (14) et le rotor (16a) de l'actionneur électromagnétique (16) sur le boîtier (13) et la plaque intermédiaire (13a1).

12. Système comprenant :
- une machine-outil (100) à commande numérique avec une broche de travail (103), et
- un dispositif de prolongement à broche selon l'une quelconque des revendications précédentes reçu sur la broche de travail (103).

13. Système selon la revendication 12, **caractérisé en ce que**
la machine-outil (100) comprend un dispositif de commande (91), qui est conçu pour commander un mouvement d'avance de la broche de travail (103) de la machine-outil (100) en direction de l'axe de broche de la broche de travail (103), et
le dispositif de prolongement à broche présente une unité de transmission (93) pour la transmission de signaux au dispositif de commande (91) de la machine-outil (100), et
l'unité de transmission (93) est conçue pour transmettre un signal de régulation au dispositif de commande (91) de la machine-outil (100), dans lequel le signal de régulation indique une force totale agissant sur l'unité de prolongement à broche (14) et/ou une position ou modification de voie de l'unité de prolongement à broche (14) et/ou de l'entraînement (15), et
le dispositif de commande (91) de la machine-outil (100) est conçu pour commander ou réguler une vitesse d'avance de la broche de travail (103) sur la base du signal de régulation reçu de l'unité de transmission (93) du dispositif de prolongement à broche, et
le dispositif de commande (91) de la machine-outil (100) est conçu pour transmettre un signal de réglage indiquant une force souhaitée en particulier un signal de réglage indiquant une valeur théorique à l'unité de transmission (93) du dispositif de prolongement à broche,
dans lequel l'unité de transmission (93) est conçue pour recevoir le signal de réglage du dispositif de commande (91) de la machine-outil (100), dans lequel l'entraînement (15) est conçu pour exercer la force réglée sur la base du signal de réglage sur l'unité de prolongement à broche (14).

14. Procédé pour commander un processus de perçage mis en oeuvre avec un dispositif de prolongement à broche selon l'une quelconque des revendications 1 à 11 sur une machine-outil (100) avec une broche de travail (103), comprenant :
- l'activation de l'actionneur électromagnétique (16) du dispositif de prolongement à broche pour l'exercice de la force de compensation sur l'unité de prolongement à broche (14) du dispositif de prolongement à broche, lorsque le dispositif de prolongement à broche avec l'axe de broche vertical et l'outil de perçage orienté vers le bas est serré sur la broche de travail (103) de la machine-outil (100) ;
- l'entraînement de l'outil de perçage serré sur la broche (14a) du dispositif de prolongement à broche ;
- le déplacement de la broche de travail (103) par rapport à une pièce (107) ;
- la mise en oeuvre du processus de perçage sur la pièce (107) avec l'outil de perçage entraîné par la broche (14a) du dispositif de prolongement à broche, comprenant la commande d'un mouvement d'avance de la broche de travail (103) dans la direction de perçage lorsque l'actionneur électromagnétique (16) du dispositif de prolongement à broche est activé et lors de l'exercice de la force opposée à la force de compensation de l'actionneur électromagnétique (16) par l'entraînement (15) du dispositif de prolongement à broche.

15. Produit-programme informatique, comprenant des instructions, qui, lors de l'exécution du programme par un ordinateur relié à une machine-outil (100) à commande numérique ou un dispositif de commande (91) d'une machine-outil (100) à commande numérique, amènent celle-ci ou celui-ci à exécuter le procédé selon la revendication 14.
